# EUROPEAN PATENT APPLICATION

(11) **EP 4 592 349 A1**
(43) Date of publication of application: **30.07.2025**
(21) Application number: 23868270.2
(22) Date of filing: 21.09.2023
(51) Int. Cl.: C08L 67/02, C08L 1/02, C08L 101/16

(54) **BIODEGRADABLE RESIN COMPOSITION**

(30) Priority: 22.09.2022 JP 2022151994
(71) Applicant: Nisshinbo Chemical Inc., Tokyo 103-8650 (JP)
(72) Inventor: NAKASHIMA, Shinichi, Chiba-shi, Chiba 267-0056 (JP); FUKASE, Atsuko, Chiba-shi, Chiba 267-0056 (JP); TANIGUCHI, Akira, Chiba-shi, Chiba 267-0056 (JP)
(74) Representative: Gill Jennings & Every LLP
(86) International application number: PCT/JP2023/034360
(87) International publication number: WO 2024/063149

(57) **Abstract**

This biodegradable resin composition contains a biodegradable resin (A), a powdery substance (B) derived from animals or plants, and a component (C). The biodegradable resin (A) is at least one selected from the group consisting of thermoplastic starch, polybutylene adipate terephthalate, polylactic acid, polybutylene succinate, polybutylene succinate adipate, polycaprolactone, and polyhydroxyalkanoic acid. The component (C) is at least one component selected from the group consisting of a compound (X) and a plasticizer. The compound (X) is a compound containing at least one functional group selected from the group consisting of an epoxy group and a carbodiimide group.

## Description

### Technical Field

The present disclosure relates to a biodegradable resin composition, in particular, relates to, for example, a biodegrading resin composition high in biodegradability in the ocean.

### Background Art

There is a difference in the rate of biodegradation among biodegradable resins, and biodegradability may be very low in an environment with few microorganisms, for example, in the ocean.

There are known, as methods for enhancing biodegradability of biodegradable resins under such an environment, methods involving mixing compounds dissolved in ambient environments, for example, in the ocean, with biodegradable resins.

For example, Patent Document 1 discloses a technique providing a method for producing a biodegradable plastic molded article containing a vegetable food residue, in which the production method achieves a low cost and excellent moldability by providing, for example, a step of adding a dry powder of a vegetable food residue having an average particle size equal to or less than a specified value.

Patent Document 2 discloses a technique providing a biodegradable resin composition including a biodegradable resin and a food-derived protein dry powder, in which the contents of these components are within specified ranges and therefore the biodegradable resin composition is assimilated by rapid progression of biodegradation when exposed to a composting environment.

Patent Document 3 discloses a technique providing a raising pot having a layer made of a composition including a biodegradable resin, in which the biodegradable resin composition contains a biodegradation promoter, to not only allow biodegradation to be suppressed during raising, but also cause no release between layers constituting the pot and furthermore allow complete biodegradation to be rapidly achieved after embedding of the entire pot into the ground once.

### Citation List

### Patent Document

Patent Document 1: Japanese Patent Application Publication No. 2002-371187
Patent Document 2: Japanese Patent Application Publication No. 2004-2687
Patent Document 3: Japanese Patent Application Publication No. 2004-2683

### Summary of Invention

### Technical Problem

As disclosed in Patent Document 1 to 3, there has been conventionally made development for an enhancement in biodegradability under a marine environment or the like by addition of a specified component to a biodegradable resin composition. Such development has led to an enhancement in biodegradability, but the degree of effect thereof cannot be said to be sufficient, and there has been a demand for further improvement.

In the case of addition of a specified component to a biodegradable resin composition, the composition and its molded article have been sometimes deteriorated in appearance due to, for example, the occurrence of air bubbles, and this problem has also been demanded to be improved.

A problem of the present disclosure is to provide a biodegradable resin composition capable of allowing a molded article excellent in appearance and biodegradability in the ocean to be produced. Another problem of the present disclosure is to provide a molded article of the composition, a method for producing the composition, use of a specified substance for an enhancement in marine biodegradability of the composition, and a method for enhancing marine biodegradability of the composition.

### Solution to Problem

The present inventors have made intensive studies, and as a result, have found that the above problems can be solved by allowing a specified component to be included in a biodegradable resin composition and have reached the present disclosure.
[1] A biodegradable resin composition comprising a biodegradable resin (A), an animal- or plant-derived powdery substance (B), and a component (C), wherein
   the biodegradable resin (A) is at least one selected from the group consisting of a thermoplastic starch, a polybutylene adipate terephthalate, a polylactic acid, a polybutylene succinate, a polybutylene succinate adipate, a polycaprolactone, and a polyhydroxyalkanoate,
   the component (C) is at least one component selected from the group consisting of a compound (X) and a plasticizer, and
   the compound (X) is a compound containing at least one functional group selected from the group consisting of an epoxy group and a carbodiimide group.
[2] The biodegradable resin composition according to [1], wherein the animal- or plant-derived powdery substance (B) is at least one selected from the group consisting of a soybean-derived substance, a wheat bran, a defatted bran, and a rice chaff.
[3] The biodegradable resin composition according to [2], wherein the soybean-derived substance is at least one selected from the group consisting of a soybean meal, a soybean hull, a soybean fiber, a soybean curd refuse, a soybean curd refuse fiber, and a soy sauce lees.
[4] The biodegradable resin composition according to [3], wherein the animal- or plant-derived powdery substance (B) is at least one selected from the group consisting of a soybean meal, a wheat bran, a soybean curd refuse, and a rice chaff.
[5] The biodegradable resin composition according to any of [1] to [4], wherein the biodegradable resin (A) is at least one selected from the group consisting of a thermoplastic starch and a polybutylene adipate terephthalate.
[6] The biodegradable resin composition according to any of [1] to [5], wherein a content of the biodegradable resin (A) is 50% by weight or more.
[7] The biodegradable resin composition according to any of [1] to [6], wherein a content of the animal- or plant-derived powdery substance (B) is 5% by weight or more and 25% by weight or less.
[8] The biodegradable resin composition according to any of [1] to [7], wherein a content of the component (C) is 0.05% by weight or more and 25% by weight or less.
[9] A molded article of the biodegradable resin composition according to any of [1] to [8].
[10] The molded article according to [9], wherein the molded article is in the form of a thin film.
[11] The molded article according to [9] or [10], wherein the molded article is for a product to be contacted with seawater.
[12] Use of the molded article according to [11], for a product to be contacted with seawater.
[13] A method for producing a biodegradable resin composition, the method comprising a step of mixing a biodegradable resin (A), an animal- or plant-derived powdery substance (B), and a component (C), wherein
   the biodegradable resin (A) is at least one selected from the group consisting of a thermoplastic starch, a polybutylene adipate terephthalate, a polylactic acid, a polybutylene succinate, a polybutylene succinate adipate, and a polycaprolactone,
   the component (C) is at least one component selected from the group consisting of a compound (X) and a plasticizer, and
   the compound (X) is a compound containing at least one functional group selected from the group consisting of an epoxy group and a carbodiimide group.
[14] Use of an animal- or plant-derived powdery substance, for preparation of a biodegradable resin composition,
   the biodegradable resin composition comprising at least, as a biodegradable resin, at least one selected from the group consisting of a polybutylene adipate terephthalate, a polylactic acid, a polybutylene succinate, a polybutylene succinate adipate, and a polycaprolactone, and
   further comprising at least one component selected from the group consisting of a plasticizer and a compound containing at least one functional group selected from the group consisting of an epoxy group and a carbodiimide group.
[15] A method for enhancing marine biodegradability of a molded article of a biodegradable resin composition obtained by mixing
   at least, as a biodegradable resin, at least one selected from the group consisting of a polybutylene adipate terephthalate, a polylactic acid, a polybutylene succinate, a polybutylene succinate adipate, and a polycaprolactone,
   an animal- or plant-derived powdery substance, and
   at least one component selected from the group consisting of a plasticizer and a compound containing at least one functional group selected from the group consisting of an epoxy group and a carbodiimide group.

### Advantageous Effect of Invention

The present disclosure can provide a biodegradable resin composition which can be used for production of a molded article excellent in appearance and biodegradability in the ocean, and furthermore can provide a molded article of the composition, a method for producing the composition, use of a specified substance for an enhancement in marine biodegradability of the composition, and a method for enhancing marine biodegradability of the composition.

### Description of Embodiments

Hereinafter, embodiments of the present disclosure are described in detail, but each configuration, any combination thereof, and the like in each embodiment are merely illustrative, and addition, omitting, replacement, and any other modification of such each configuration can be appropriately made within the scope not departing from the gist of the present disclosure. The present disclosure is not limited by any embodiment, but is limited by the scope of the claims.

Herein, "high biodegradation in the ocean" in the present disclosure means excellent biodegradability in a state of contact in the ocean or contact with seawater for a certain period or more.

The description of "XX or more and YY or less" or "XX to YY" representing a numerical value range means a numerical value range including the lower limit and the upper limit as end points, unless particularly noted. In a case where a numerical value range is described stepwise, the upper limit and the lower limit of such a numerical value range can be arbitrarily combined.

The expression "A or B" in the present disclosure can be read as "at least one selected from the group consisting of A and B".

In addition, "a plurality of" in the present disclosure means "2 or more".

### <Biodegradable resin composition>

A biodegradable resin composition according to one embodiment of the present disclosure (also simply referred to as "biodegradable resin composition" or "composition".) is a biodegradable resin composition containing
a biodegradable resin (A), an animal- or plant-derived powdery substance (B), and a component (C), wherein
the biodegradable resin (A) is at least one selected from the group consisting of a thermoplastic starch, a polybutylene adipate terephthalate, a polylactic acid, a polybutylene succinate, a polybutylene succinate adipate, a polycaprolactone, and a polyhydroxyalkanoate,
the component (C) is at least one component selected from the group consisting of a compound (X) and a plasticizer, and
the compound (X) is a compound containing at least one functional group selected from the group consisting of an epoxy group and a carbodiimide group.

It has been found according to studies of the present inventors that, in a case where an animal- or plant-derived powdery substance is melt-kneaded with a conventional biodegradable resin composition, the problem of deterioration in appearance of a molded article of the composition is caused.

On the other hand, the present inventors have found that the biodegradable resin composition according to the present embodiment contains not only specified biodegradable resin and animal- or plant-derived powdery substance, but also a component (C), thereby enabling the composition or its molded article to be improved in appearance with high biodegradability in the ocean being kept.

### [Biodegradable resin (A)]

The type of the biodegradable resin (A) is not particularly limited as long as it is at least one selected from the group consisting of a thermoplastic starch, a polybutylene adipate terephthalate, a polylactic acid, a polybutylene succinate, a polybutylene succinate adipate, a polycaprolactone, and a polyhydroxyalkanoate, at least one functional group selected from the group consisting of a thermoplastic starch, a polybutylene adipate terephthalate, a polylactic acid, a polybutylene succinate, and a polybutylene succinate adipate is preferable, at least one functional group selected from the group consisting of a thermoplastic starch and a polybutylene adipate terephthalate is more preferable, and a thermoplastic starch and a polybutylene adipate terephthalate may be used in combination, from the viewpoint of allowing for an improvement in appearance of a molded article of the composition. Such a biodegradable resin (A) may be used singly or in any combination of two or more kinds thereof at any ratio. Such a biodegradable resin (A) used here may be one produced according to a known production method, or may be a commercially available product.

The content of the biodegradable resin (A) in the biodegradable resin composition (the total content in the case of a plurality of kinds included) is not particularly limited, and is preferably 50% by weight or more in order to allow a molded article of the biodegradable resin composition to ensure proper strength. Even in a case where the biodegradable resin composition of the present disclosure contains a high amount of 50% by weight or more of a biodegradable resin which tends to be inferior in biodegradability in the ocean, an animal- or plant-derived powdery substance (B) described below is included as the component for promoting marine degradability, thereby allowing the composition or its molded article to ensure sufficient biodegradability in the ocean. On the other hand, in a case where the content of the animal- or plant-derived powdery substance (B) in the biodegrading resin composition is too high, progression of biodegradation of the component is accelerated to hardly allow for good progression of biodegradation of the biodegradable resin. The content of the biodegradable resin (A) in the biodegradable resin composition is more preferably 60% by weight or more, further preferably 70% by weight or more, particularly preferably 75% by weight or more, especially preferably 79% by weight or more. On the other hand, the upper limit is preferably 99% by weight or less, more preferably 97% by weight or less, further preferably 95% by weight or less, particularly preferably 93% by weight or less, especially preferably 90% by weight or less in terms of the balance with the contents of the animal- or plant-derived powdery substance (B), the component (C), and the like. The content of the biodegradable resin (A) is preferably, for example, 50 to 99% by weight, 60 to 97% by weight, 70 to 95% by weight, 75 to 93% by weight, 79 to 90% by weight.

### [Animal- or plant-derived powdery substance (B)]

When the biodegradable resin composition contains an animal- or plant-derived powdery substance (B), a molded article of the composition can ensure favorable biodegradability even in an environment in contact with seawater, like the ocean.

It is presumed by the present inventors that the reason for this is because the molded article of the resin composition includes the animal- or plant-derived powdery substance (B), thereby making it easy to aggregate microorganisms contained in seawater, on a surface of the molded article, to allow assimilation of the above component and biodegradable resin by microorganisms to efficiently occur.

Thus, the biodegradable resin composition is preferably a marine-biodegradable resin composition. The marine-biodegradable resin composition refers to a biodegradable resin composition high in biodegradation in the ocean.

The animal- or plant-derived powdery substance may also be expressed as a "degradation promoter".

The animal- or plant-derived powdery substance (B) in the present disclosure is a substance except for the above biodegradable resin (A).

The type of the animal- or plant-derived powdery substance (B) is not particularly limited, and is preferably at least one selected from the group consisting of a soybean-derived substance, a wheat bran, a defatted bran, a soy sauce lees, a rice chaff, and the like from the viewpoint that favorable biodegradability can be ensured. The soybean-derived substance is not particularly limited as long as it is a substance derived from soybeans, and examples of a specific type include at least one selected from the group consisting of a soybean meal, a soybean hull, a soybean fiber, a soybean curd refuse, a soybean curd refuse fiber, a soy sauce lees, and the like.

Among them, at least one selected from the group consisting of a soybean meal, a wheat bran, a soybean curd refuse, and a rice chaff is preferred, and a soybean meal is particularly preferred from the viewpoint that favorable biodegradability can be ensured. The animal- or plant-derived powdery substance (B) may be used singly or in any combination of two or more kinds thereof at any ratio. The animal- or plant-derived powdery substance (B) used here may be one produced according to a known production method, or may be a commercially available product.

The soybean meal is a cake after squeezing the fat portion of soybeans. The soybean meal can also be obtained as a cake formed by squeezing the fat portion from soybeans, or a commercially available product can also be used. The soybean meal is preferable because it is preferred by microorganisms in seawater, and it is high in effect of biodegradability promotion.

The soybean hull is a hull of soybeans. The soybean hull can also be obtained by peeling from soybeans not treated with any particular treatment, or can also be easily obtained by peeling from soybeans treated, for example, heated, or a commercially available product can also be used.

The soybean fiber is a dietary fiber obtained from the soybean meal. The soybean fiber can be obtained by, for example, steaming, extracting, and separating the soybean meal, to separate an insoluble dietary fiber and a water-soluble dietary fiber, or a commercially available product can also be used. In other words, the soybean fiber may be an insoluble dietary fiber or may be a water-soluble dietary fiber.

The wheat bran is a by-product obtained in production of wheat flour from wheat. Specifically, wheat is configured from endosperm, germ, and husk (skin), and the wheat bran refers to the remaining portion obtained by removing endosperm from wheat. The wheat bran can also be obtained as the residue resulting from removal of endosperm and germ from wheat, or a commercially available product can also be used.

The soybean curd refuse is a cake after squeezing soymilk in the course of production of soybean curd from soybeans. The soybean curd refuse can also be obtained as a cake resulting from squeezing soymilk in the course of production of soybean curd from soybeans, or a commercially available product can also be used. A dry powder obtained by evaporating moisture through a drying step is preferably used.

The soybean curd refuse fiber is a dietary fiber obtained from soybean curd refuse. The soybean curd refuse fiber can be obtained by, for example, steaming, extracting, and separating the soybean curd refuse, to separate an insoluble dietary fiber and a water-soluble dietary fiber, or a commercially available product can also be used. In other words, the soybean curd refuse fiber may be an insoluble dietary fiber or may be a water-soluble dietary fiber.

The soy sauce lees correspond to a by-product generated during squeezing the unrefined portion in production of the soy sauce with soybeans as a raw material. One obtained as the by-product may be used for the soybean curd refuse fiber, or a commercially available product can also be used.

The defatted bran is a substance obtained by removing the fat content from rice bran as germ or husk occurring in refining of brown rice. The defatted bran may be one obtained by removing the fat content from rice bran, or a commercially available product can also be used.

The rice chaff refers to a skin portion located outermost of rice hull (unhulled rice) attached on a stalk portion of paddy rice. The rice chaff can also be obtained as a by-product in the course of threshing and/or hulling of paddy rice and refining of brown rice, or a commercially available product can also be used.

The animal- or plant-derived powdery substance (B) is preferably one obtained by pulverization tailored to the thickness of the molded article. For example, the animal- or plant-derived powdery substance (B) is preferably pulverized.

The maximum particle size is preferably 200 µm or less, more preferably 100 µm or less, further preferably 75 µm or less. The lower limit of the maximum particle size is not particularly limited, and may be 0.01 µm or may be 0.10 µm. The maximum particle size is preferably, for example, 0.01 to 200 µm, 0.10 to 100 µm, or 0.10 to 75 µm.

The average particle size (in the present disclosure, also referred to as "D50 (median size)") is preferably 100 µm or less, more preferably 50 µm or less, further preferably 30 µm or less. The lower limit of the median size is not particularly limited, and may be 0.01 µm or may be 0.10 µm. The median size is preferably, for example, 0.01 to 100 µm, 0.10 to 50 µm, or 0.10 to 30 µm.

Such a range is particularly preferable in a case where the molded article is in the form of a thin film. The maximum particle size and the median size can be adjusted by modifying the pulverization time and conditions of classification with a sieve or the like. The median size in the present disclosure refers to a median value on a volume basis, as measured by a laser diffraction/scattering type particle size distribution measurement method.

The content of the animal- or plant-derived powdery substance (B) (the total content in the case of a plurality of kinds included) in the biodegradable resin composition is not particularly limited, and is preferably 3% by weight or more, more preferably 5% by weight or more, further preferably 7% by weight or more from the viewpoint of an enhancement in aggregation ability of microorganisms to the resin composition or its molded article and thus an enhancement in biodegradability of the resin composition or its molded article in an environment in contact with seawater, like the ocean. On the other hand, the upper limit is preferably 45% by weight or less, more preferably 25% by weight or less, further preferably 20% by weight or less in terms of the balance with the content of the above-mentioned biodegradable resin (A). The content is preferably, for example, 3 to 45% by weight, 5 to 25% by weight, or 7 to 20% by weight.

The ratio between the contents of the biodegradable resin (A) and the animal- or plant-derived powdery substance (B) in the biodegradable resin composition is not particularly limited, and the content of the animal- or plant-derived powdery substance (B) may be 0.5 to 40 and is preferably 1 to 35, more preferably 5 to 30 under the assumption that the content of the biodegradable resin (A) is 100 in terms of the weight ratio.

### [Component (C)]

The biodegradable resin composition includes a component (C). The component (C) is at least one component selected from the group consisting of a compound (X) and a plasticizer, and the compound (X) is a compound containing at least one functional group selected from the group consisting of an epoxy group and a carbodiimide group. The component (C) used here may be a single component, or may be any combination of two or more kinds thereof at any ratio. Only one or both of the compound (X) and the plasticizer may be used.

The component (C) can improve appearance of a molded article of the composition.

The component (C) in the present disclosure is a substance except for the above biodegradable resin (A) and animal- or plant-derived powdery substance (B).

The plasticizer in the present disclosure is a substance except for the compound containing at least one functional group selected from the group consisting of an epoxy group and a carbodiimide group.

The compound (X) is not particularly limited as long as it is the compound containing at least one functional group selected from the group consisting of an epoxy group and a carbodiimide group.

The epoxy group-containing compound is not particularly limited as long as it is a compound containing an epoxy group in one molecule, and is preferably a compound containing two or more epoxy groups in one molecule. Examples include sorbitol polyglycidyl ether, polypropyleneglycol diglycidyl ether, glycerin polyglycidyl ether, glycerol polyglycidyl ether, polyglycerol polyglycidyl ether, trimethylolpropane polyglycidyl ether, 1,6-hexanediol diglycidyl ether, pentaerythritol polyglycidyl ether, resorcinol diglycidyl ether, neopentyl glycol diglycidyl ether, a bisphenol A-type epoxy compound, a bisphenol F-type epoxy compound, a bisphenol S-type epoxy compound, a hydrogenated bisphenol-type epoxy compound, a 2,2'-diallyl bisphenol A-type epoxy compound, a propylene oxide-added bisphenol A-type epoxy compound, a resorcinol-type epoxy compound, a biphenyl-type epoxy compound, a sulfide-type epoxy compound, a phenol novolac-type epoxy compound, an ortho-cresol novolac-type epoxy compound, a diphenyl ether-type epoxy compound, a glycidylamine-type epoxy compound, an alkylpolyol-type epoxy compound, a rubber-modified epoxy compound, or a glycidyl ester compound.

Among them, sorbitol polyglycidyl ether is preferably used.

The epoxy group-containing compound may be used singly or in any combination of two or more kinds thereof at any ratio.

The carbodiimide group-containing compound is one having one or more carbodiimide groups in its molecule, and can be synthesized by a commonly well-known method, for example, by subjecting each polyisocyanate to a decarboxylation-condensation reaction at a temperature of about 70°C or more in no solvent or in an inert solvent, with an organophosphorus compound or an organometallic compound as a catalyst. The carbodiimide group-containing compound is not particularly limited as long as it is a compound having a carbodiimide group in one molecule, and is preferably a compound having two or more carbodiimide groups in one molecule.

Examples of monocarbodiimide having one carbodiimide group in one molecule include N,N'-diphenylcarbodiimide, N,N'-di-2,6-diisopropylphenylcarbodiimide, N,N'-di-2,6-dimethylphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N-octadecyl-N'-phenylcarbodiimide, N-benzyl-N'-phenylcarbodiimide, N,N'-di-o-ethylphenylcarbodiimide, N,N'-di-p-ethylphenylcarbodiimide, N,N'-di-o-isopropylphenylcarbodiimide, N,N'-di-p-isopropylphenylcarbodiimide, N,N'-di-o-isobutylphenylcarbodiimide, N,N'-di-p-isobutylphenylcarbodiimide, N,N'-di-2,6-diethylphenylcarbodiimide, N,N'-di-2-ethyl-6-isopropylphenylcarbodiimide, N,N'-di-2-isobutyl-6-isopropylphenylcarbodiimide, N,N'-di-2,4,6-trimethylphenylcarbodiimide, N,N'-di-2,4,6-triisopropylphenylcarbodiimide, or N,N'-di-2,4,6-triisobutylphenylcarbodiimide.

One produced by various methods can be used for a polycarbodiimide compound having two or more carbodiimide groups in one molecule, and one produced by a conventional production method of polycarbodiimide [for example, US. Patent No. 2941956, JP-B No. S47-33279, J. Org. Chem. 28, 2069-2075 (1963), Chemical Review l981, Vol.81 No. 4, p 619-621] can be basically used.

Examples of organic diisocyanate as a synthesis raw material in production of the polycarbodiimide compound can include aromatic diisocyanate, aliphatic diisocyanate, alicyclic diisocyanate, and any mixture thereof, and specific examples can include 1,5-naphthalene diisocyanate, 4,4'-diphenylmethane diisocyanate, 4,4'-diphenyl dimethyl methane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4'-diisocyanate, methylcyclohexane diisocyanate, tetramethylxylylene diisocyanate, 2,6-diisopropylphenyl isocyanate, or 1,3,5-triisopropylbenzene-2,4-diisocyanate.

Among them, an aliphatic (including alicyclic) organic diisocyanate is preferable and in particular isophorone diisocyanate, dicyclohexylmethane-4,4'-diisocyanate, tetramethylxylylene diisocyanate or any mixture of two kinds thereof is more preferably used from the viewpoint that the degree of polymerization of the polycarbodiimide compound is easily controlled, discoloration due to ultraviolet light hardly occurs and the appearance of the molded article of the composition can be improved.

In the case of the polycarbodiimide compound, control to an appropriate degree of polymerization can be achieved by stopping a polymerization reaction by cooling or the like in the middle. In this case, a terminal is an isocyanate group. Furthermore, in order to achieve control to an appropriate degree of polymerization, a method is also adopted in which a compound reactive with a terminal isocyanate group of the polycarbodiimide compound, for example, a monoisocyanate compound, is used to encapsulate all or some of the remaining terminal isocyanate groups. The degree of polymerization is preferably controlled in terms of an enhancement in quality because an enhancement in compatibility with biodegradable plastic and/or an enhancement in storage stability can be achieved.

Examples of such a monoisocyanate compound for encapsulating a terminal of the polycarbodiimide compound and thus controlling the degree of polymerization can include phenyl isocyanate, tolyl isocyanate, dimethylphenyl isocyanate, cyclohexyl isocyanate, butyl isocyanate, or naphthyl isocyanate.

The terminal encapsulant for encapsulating a terminal of the polycarbodiimide compound and thus controlling the degree of polymerization is not limited to the above monoisocyanate compound, and examples can include an active hydrogen compound capable of reacting with an isocyanate group, for example, (i) an -OH group-containing aliphatic, aromatic or alicyclic compound, methanol, ethanol, phenol, cyclohexanol, N-methylethanolamine, polyethylene glycol monomethyl ether, or polypropylene glycol monomethyl ether; (ii) an -NH- group-containing diethylamine or dicyclohexylamine; (iii) a -NH₂ group-containing butylamine or cyclohexylamine; (iv) a -COOH group-containing succinic acid, benzoic acid or cyclohexanoic acid; (v) an -SH group-containing ethyl mercaptan, allyl mercaptan, or thiophenol; (vi) an epoxy group-containing compound; and (vii) an acid anhydride such as acetic anhydride, methyl tetrahydrophthalic anhydride, or methyl hexahydrophthalic anhydride.

Among them, the -OH group-containing compound used here is preferably polyethylene glycol monomethyl ether, the -NH- group-containing compound used here is preferably dicyclohexylamine, or the -NH₂ group-containing compound used here is preferably cyclohexylamine, more preferably cyclohexylamine, from the viewpoint that terminal encapsulating capable of improving appearance can be easily made.

The carbodiimide group-containing compound may be used singly or in any combination of two or more kinds thereof at any ratio.

Examples of the plasticizer include an adipic acid ester-based plasticizer, a phthalic acid ester-based plasticizer, or a sulfonic acid ester-based plasticizer.

Among them, an adipic acid ester-based plasticizer is preferably used from the viewpoint of allowing for an improvement in appearance of a molded article of the composition.

The carbodiimide group-containing compound may be used singly or in any combination of two or more kinds thereof at any ratio.

The content of the component (C) in the biodegradable resin composition (the total content in the case of a plurality of kinds included) is not particularly limited, and is preferably 0.05% by weight or more, more preferably 0.1% by weight or more, further preferably 0.5% by weight or more, particularly preferably 1% by weight or more, especially preferably 3% by weight or more, most preferably 5% by weight or more from the viewpoint of allowing for an improvement in appearance of a molded article of the composition. On the other hand, the upper limit is preferably 25% by weight or less, more preferably 20% by weight or less, further preferably 17% by weight or less, particularly preferably 15% by weight or less, especially preferably 13% by weight or less, most preferably 11% by weight or less in terms of the balance with the contents of the above-mentioned biodegradable resin (A) and animal- or plant-derived powdery substance (B). The content is preferably, for example, 0.05 to 25% by weight, 0.1 to 20% by weight, 0.5 to 17% by weight, 1 to 15% by weight, 3 to 13% by weight, or 5 to 11% by weight.

The content of the compound (X) in the biodegradable resin composition (the total content in the case of a plurality of kinds included) is not particularly limited, and is preferably 0.1% by weight or more, more preferably 0.2% by weight or more, further preferably 0.5% by weight or more from the viewpoint of allowing for an improvement in appearance. On the other hand, the upper limit is preferably 10% by weight or less, more preferably 5% by weight or less, further preferably 3% by weight or less in terms of the balance with the contents of the above-mentioned biodegradable resin (A) and animal- or plant-derived powdery substance (B). The content is preferably, for example, 0.1 to 10% by weight, 0.2 to 5% by weight, or 0.5 to 3% by weight.

The content of the plasticizer in the biodegradable resin composition (the total content in the case of a plurality of kinds included) is not particularly limited, and is preferably 0.5% by weight or more, more preferably 1% by weight or more, further preferably 5% by weight or more from the viewpoint of allowing for an improvement in appearance. On the other hand, the upper limit is preferably 20% by weight or less, more preferably 15% by weight or less, further preferably 13% by weight or less in terms of the balance with the contents of the above-mentioned biodegradable resin (A) and animal- or plant-derived powdery substance (B). The content is preferably, for example, 0.5 to 20% by weight, 1 to 15% by weight, or 5 to 13% by weight.

The ratio between the contents of the animal- or plant-derived powdery substance (B) and the component (C) in the biodegradable resin composition is not particularly limited, and the content of the component (C) may be 2 to 150 and is preferably 2 to 100, more preferably 2 to 50 under the assumption that the content of the animal- or plant-derived powdery substance (B) is 100 in terms of the weight ratio.

### [Other additive components]

The biodegradable resin composition of the present disclosure may contain still another component as long as the effects thereof are not impaired. Examples of such still another component include a pigment, a filler, a leveling agent, a surfactant, a dispersant, an ultraviolet absorber, a flame retardant, an antioxidant, a colorant, or a crosslinker.

The biodegradable resin composition may or may not include any other biodegradable resin than the above biodegradable resin (A).

### <Method for producing biodegradable resin composition>

The method for producing the biodegradable resin composition of the present disclosure is not particularly limited, and a known method can be used.

One example of a method for producing a biodegradable resin is a method for producing a biodegradable resin composition, the method including
a step of mixing a biodegradable resin (A), an animal- or plant-derived powdery substance (B), and a component (C), wherein
the biodegradable resin (A) is at least one selected from the group consisting of a thermoplastic starch, a polybutylene adipate terephthalate, a polylactic acid, a polybutylene succinate, a polybutylene succinate adipate, and a polycaprolactone,
the component (C) is at least one component selected from the group consisting of a compound (X) and a plasticizer, and
the compound (X) is a compound containing at least one functional group selected from the group consisting of an epoxy group and a carbodiimide group.

The mixing method in the above mixing step is not particularly limited, and examples thereof include a method in which a mixture of the components is melt-kneaded by various uniaxial or multiaxial extruder at a predetermined temperature, for example, a temperature of about 120 to 250°C. The components may be collectively kneaded, or some of the components may be kneaded, and then the remaining components may be added and kneaded.

### <Molded article>

A molded article can be produced with the biodegradable resin composition of the present disclosure. The method for producing the molded article is not limited, and the molded article can be produced by heating the biodegradable resin composition prepared by the above method, to a temperature equal to or more than the softening point, molding the biodegradable resin composition so that desired shape and size are achieved, and cooling and curing the resultant. In other words, the molded article of the biodegradable resin composition may be a molded article obtained by curing the biodegradable resin composition.

The molded article is preferably in the form of a thin film. The molded article in the form of a thin film refers to, for example, a molded article having a thickness of 2000 µm or less. The thickness of the molded article is, for example, 0.1 to 2000 µm or 1 to 2000 µm.

The application of the molded article is not particularly limited, and examples thereof can include a general-purpose article such as a film, a sheet, a tray, or a garbage bag. Such a general-purpose article also encompasses one which can be disposed in the ocean after use even if not contacted with seawater during use. The thickness of the film can be, for example, 1 µm or more and 100 µm or less, and the thickness of the sheet can be, for example, 100 µm or more and 2000 µm or less. The thickness of the garbage bag can be, for example, 1 µm or more and 70 µm or less. Furthermore, examples of the application of the molded article can also include a product to be contacted with seawater. Examples of the product to be contacted with seawater can include any product for use in the fishing industry, for example, fishing implements including fishing lines and nets. In a case where a molded article obtained with the biodegradable resin composition of the present disclosure is used for a product to be contacted with seawater, the molded article is not immediately degraded during use. On the other hand, the molded article, if lost in the ocean by an unexpected occurrence, is degraded in the ocean due to favorable marine biodegradability thereof, and thus hardly remains in the ocean, this remaining being problematic in recent years.

A mode is exemplified in which the rate of degradation of the molded article obtained with the biodegradable resin composition of the present disclosure, in the ocean, for example, in the case of immersion in seawater kept at 30°C for 1.5 months is decreased by 10% by weight or more with, as reference, the original weight of a film having a thickness of 50 µm.

More specifically, a mode is exemplified in which the rate of degradation is decreased by 25% by weight or more or 18% by weight or more in a molded article of a biodegradable resin composition with soybean meal as the animal- or plant-derived powdery substance (B), the rate of degradation is decreased by 18% by weight or more in the case of use of wheat bran, and the rate of degradation is decreased by 18% by weight or more in the case of use of soybean curd refuse.

For the above reasons, the molded article of the biodegradable resin composition of the present disclosure is suited to use for a product which can accidently flow out in the ocean (for example, the above general-purpose article) or a product to be contacted with seawater, in particular, a product to be intendedly contacted with seawater (for example, the above product for use in the fishing industry).

It can be seen based on the above description that, according to the present disclosure, a specific mode for an enhancement in marine biodegradability of a molded article of a biodegradable resin composition containing at least, as a biodegradable resin, at least one selected from the group consisting of a polybutylene adipate terephthalate, a polylactic acid, a polybutylene succinate, a polybutylene succinate adipate, and a polycaprolactone, and further containing a plasticizer, and at least one component selected from the group consisting of a compound containing at least one functional group selected from the group consisting of an epoxy group and a carbodiimide group is preferably a mode in which an animal- or plant-derived powdery substance is used for preparation of the biodegradable resin composition.

The above conditions including the types, contents, and the like of the components, described in the above section "Biodegradable resin composition" can be applied with respect to conditions including the types, contents, and the like of the components.

The present disclosure also includes a method for enhancing marine biodegradability of a biodegradable resin composition obtained by mixing
at least, as a biodegradable resin, at least one selected from the group consisting of a polybutylene adipate terephthalate, a polylactic acid, a polybutylene succinate, a polybutylene succinate adipate, and a polycaprolactone,
an animal- or plant-derived powdery substance, and
at least one component selected from the group consisting of a plasticizer, and a compound containing at least one functional group selected from the group consisting of an epoxy group and a carbodiimide group. In other words, the method is a method for enhancing marine biodegradability of a molded article of a biodegradable resin composition obtained by mixing an animal- or plant-derived powdery substance with a biodegradable resin composition including, in addition to the above biodegradable resin, at least one component selected from the group consisting of a plasticizer and a compound containing at least one functional group selected from the group consisting of an epoxy group and a carbodiimide group. The method can provide a molded article higher in marine biodegradability as compared with a molded article of a biodegradable resin composition not containing any animal- or plant-derived powdery substance.

The above conditions including the types, contents, and the like of the components, described in the above section "Biodegradable resin composition" can be applied with respect to conditions including the types, contents, and the like of the components.

The content described in the section "Molded article" can be applied with respect to the method for molding the resin composition obtained with the above method, and the application of the molded article thereof.

### Examples

Hereinafter, the present disclosure is specifically described with reference to Examples. However, the present disclosure is not limited to any mode of the following Examples.

### <Raw material>

The following materials were used as raw materials in the present Examples.

### [Biodegradable resin]

· Biodegradable resin: thermoplastic starch/polybutylene adipate terephthalate (manufactured by Novamont S.p.A.; EF05B)
[Animal- or plant-derived powdery substance]
· Soybean meal: soybean oil cake (manufactured by SHOWA SANGYO CO., LTD.; N7-P1-K1)
· Soybean curd refuse: soybean curd refuse powder (manufactured by TAKAHASHI INC.; soybean curd refuse powder (ultrafine powder))
· Wheat bran: wheat bran (manufactured by SHOWA SANGYO CO., LTD.; bran)
· Rice chaff: rice chaff (manufactured by TAKASHO CO., LTD.)
· Soybean hull (manufactured by Shimizu Seifun Kojyo Co., Ltd.)
· Soybean fiber (manufactured by Food Bridge Japan Corp.)
· Soybean curd refuse fiber (manufactured by Nippon Garlic Corporation)
· Soy sauce lees (manufactured by Mitsuru-shoyu)

An animal- or plant-derived powdery substance was obtained by recovering one formed by pulverizing each of these powders described above, with a desktop pulverizer (Wonder Blender WB-1, manufactured by OSAKA CHEMICAL CO., LTD.) and then allowing the resultant to pass through a mesh having an aperture of 75 µm.

### [Compound (X)]

· Carbodiimide group-containing compound A:

### (Synthesis)

To a flask equipped with a stirring motor, a nitrogen gas-bubbling pipe and a cooling pipe were added 576.4 g of 4,4'-dicyclohexylmethane diisocyanate and 2.9 g of a carbodiimidation catalyst (3-methyl-1-phenyl-2-phospholene-1-oxide), these were reacted at 175°C for 18 hours under nitrogen gas bubbling, to obtain a terminal isocyanate compound having a degree n of polymerization of 5, thereafter the reaction product was cooled to 100°C, 74.9 g of cyclohexylamine was added thereto, and the resultant was stirred for 1 hour, to obtain a carbodiimide group-containing compound A.
· Carbodiimide group-containing compound B: Stabaxol I (manufactured by Rhein Chemie Corporation)
· Epoxy group-containing compound A: DENACOL EX-614B (manufactured by Nagase ChemteX Corporation, water-soluble polyfunctional, aliphatic epoxy)

### [Plasticizer]

· Plasticizer: DAIFATTY-101 (manufactured by DAIHACHI CHEMICAL INDUSTRY CO., LTD.; adipic acid ester-based aliphatic plasticizer; diprotic acid ester)

### <Production of biodegradable resin composition>

Each raw material was prepared at a ratio shown in Table 1, and kneaded (melt-kneaded) with a laboratory mixer under a condition of 150°C for 6 minutes, to obtain a resin composition. Here, each blank in the column "Raw material" in Table 1 represents no addition. The numerical value with respect to each raw material in Table 1 is expressed by "% by weight".

### <Marine biodegradability>

The resin compositions obtained by melt-kneading were each pressed by a flat plate at 150°C, to produce a sheet having a thickness of about 50 µm, and the sheet was formed into a 20-mm square sheet. Such each sheet was washed with ethanol, dried in vacuum, thereafter weighed, surrounded with a wire net, and then immersed in a water tank in which seawater kept at 30°C was placed. After a lapse of 1.5 months, the wire net was taken out, the sheet was washed, dried and then weighed in the same manner as that before the test, to determine the proportion of weight loss before and after the test, and evaluation was performed according to the following evaluation criteria. The results are shown in Table 1.

### [Evaluation criteria]

3: a proportion of weight loss before and after the test, of 25% by weight or more.
2: a proportion of weight loss before and after the test, of 18% by weight or more and less than 25% by weight.
1: a proportion of weight loss before and after the test, of less than 18% by weight.

### <Appearance>

The resin compositions obtained by melt-kneading were each pressed by a flat plate at 150°C, to produce a sheet having a thickness of about 50 µm, and the sheet was formed into a 20-mm square sheet. The appearance of such each sheet was observed with a microscope (apparatus name: KEYENCE DIGITAL MICROSCOPE VHX-200), and evaluation was performed according to the following evaluation criteria. The results are shown in Table 1.

### [Evaluation criteria]

4: no air bubbles observed.
3: ultrafine air bubbles of less than 20 µm slightly observed.
2: air bubbles of 90 µm or more slightly observed.
1: many bubbles of 90 µm or more observed.

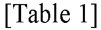

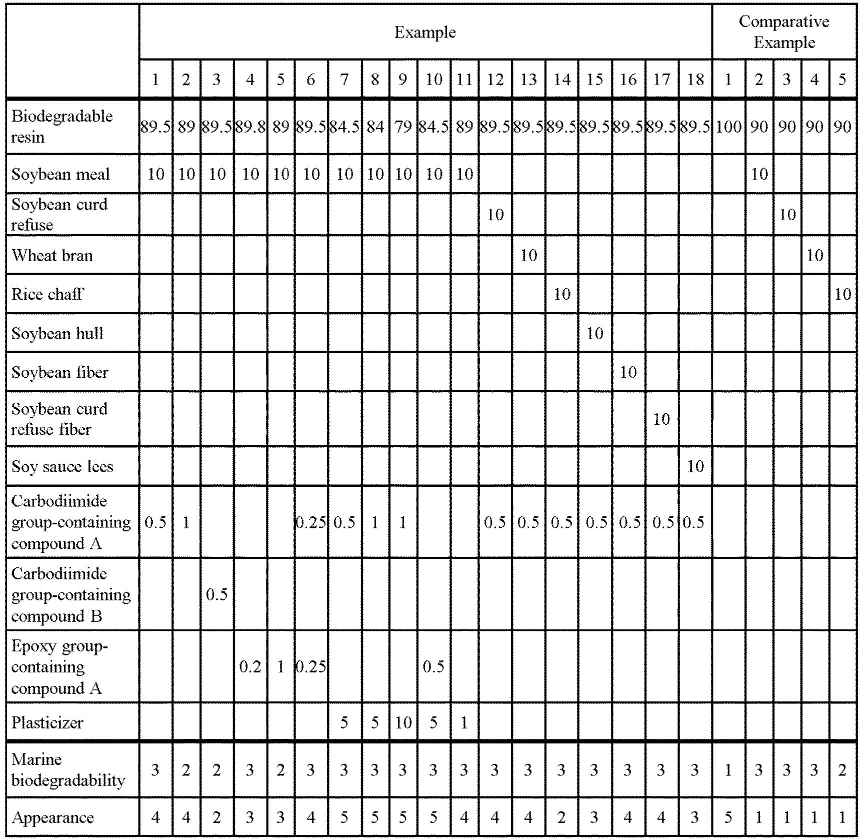

It can be seen from the evaluation results of the molded products of Examples 1 to 18 that a molded article (sheet) obtained with a biodegradable resin composition according to an embodiment of the present disclosure is excellent in marine biodegradability and appearance.

On the other hand, it can be seen from the evaluation results of the molded product of Comparative Example 1 that a composition not including any animal- or plant-derived powdery substance is inferior in marine biodegradability. It is supposed from these results that a composition contains an animal- or plant-derived powdery substance and thus a large amount of microorganisms in seawater are accumulated on a biodegradable resin in a molded article to result in an enhancement in biodegradability.

It can also be seen from the evaluation results of the molded products of Comparative Examples 2 to 5 that a composition not including at least one component (component (C)) selected from the group consisting of a plasticizer and a compound containing at least one functional group selected from the group consisting of an epoxy group and a carbodiimide group is inferior in appearance.

### Industrial Applicability

The present disclosure can provide a biodegradable resin composition or the like which can be used for production of a molded article excellent in appearance and high in biodegradability in the ocean.

## Claims

1. A biodegradable resin composition comprising a biodegradable resin (A), an animal- or plant-derived powdery substance (B), and a component (C), wherein
the biodegradable resin (A) is at least one selected from the group consisting of a thermoplastic starch, a polybutylene adipate terephthalate, a polylactic acid, a polybutylene succinate, a polybutylene succinate adipate, a polycaprolactone, and a polyhydroxyalkanoate,
the component (C) is at least one component selected from the group consisting of a compound (X) and a plasticizer, and
the compound (X) is a compound containing at least one functional group selected from the group consisting of an epoxy group and a carbodiimide group.

2. The biodegradable resin composition according to claim 1, wherein the animal- or plant-derived powdery substance (B) is at least one selected from the group consisting of a soybean-derived substance, a wheat bran, a defatted bran, and a rice chaff.

3. The biodegradable resin composition according to claim 2, wherein the soybean-derived substance is at least one selected from the group consisting of a soybean meal, a soybean hull, a soybean fiber, a soybean curd refuse, a soybean curd refuse fiber, and a soy sauce lees.

4. The biodegradable resin composition according to claim 3, wherein the animal- or plant-derived powdery substance (B) is at least one selected from the group consisting of a soybean meal, a wheat bran, a soybean curd refuse, and a rice chaff.

5. The biodegradable resin composition according to any one of claims 1 to 4, wherein the biodegradable resin (A) is at least one selected from the group consisting of a thermoplastic starch and a polybutylene adipate terephthalate.

6. The biodegradable resin composition according to any one of claims 1 to 5, wherein a content of the biodegradable resin (A) is 50% by weight or more.

7. The biodegradable resin composition according to any one of claims 1 to 6, wherein a content of the animal- or plant-derived powdery substance (B) is 5% by weight or more and 25% by weight or less.

8. The biodegradable resin composition according to any one of claims 1 to 7, wherein a content of the component (C) is 0.05% by weight or more and 25% by weight or less.

9. A molded article of the biodegradable resin composition according to any one of claims 1 to 8.

10. The molded article according to claim 9, wherein the molded article is in the form of a thin film.

11. The molded article according to claim 9 or 10, wherein the molded article is for a product to be contacted with seawater.

12. Use of the molded article according to claim 11, for a product to be contacted with seawater.

13. A method for producing a biodegradable resin composition, the method comprising a step of mixing a biodegradable resin (A), an animal- or plant-derived powdery substance (B), and a component (C), wherein
the biodegradable resin (A) is at least one selected from the group consisting of a thermoplastic starch, a polybutylene adipate terephthalate, a polylactic acid, a polybutylene succinate, a polybutylene succinate adipate, and a polycaprolactone,
the component (C) is at least one component selected from the group consisting of a compound (X) and a plasticizer, and
the compound (X) is a compound containing at least one functional group selected from the group consisting of an epoxy group and a carbodiimide group.

14. Use of an animal- or plant-derived powdery substance, for preparation of a biodegradable resin composition,
the biodegradable resin composition comprising at least, as a biodegradable resin, at least one selected from the group consisting of a polybutylene adipate terephthalate, a polylactic acid, a polybutylene succinate, a polybutylene succinate adipate, and a polycaprolactone, and
further comprising at least one component selected from the group consisting of a plasticizer and a compound containing at least one functional group selected from the group consisting of an epoxy group and a carbodiimide group.

15. A method for enhancing marine biodegradability of a molded article of a biodegradable resin composition obtained by mixing
at least, as a biodegradable resin, at least one selected from the group consisting of a polybutylene adipate terephthalate, a polylactic acid, a polybutylene succinate, a polybutylene succinate adipate, and a polycaprolactone,
an animal- or plant-derived powdery substance, and
at least one component selected from the group consisting of a plasticizer and a compound containing at least one functional group selected from the group consisting of an epoxy group and a carbodiimide group.
